# EUROPÄISCHE PATENTSCHRIFT

(11) **EP 1 494 301 B1**
(45) Veröffentlichungstag und Bekanntmachung des Hinweises auf die Patenterteilung: **28.02.2007**
(21) Anmeldenummer: 04001400.3
(22) Anmeldetag: 23.01.2004
(51) Int. Cl.: H01M 2/38, H01M 2/10

(54) **Batterie für Fahrzeuge**
Battery for vehicles
Batterie pour véhicules

(30) Priorität: 24.06.2003 DE 20309676 U
(43) Veröffentlichungstag der Anmeldung: 05.01.2005
(73) Patentinhaber: HAWKER GmbH, 58089 Hagen (DE)
(72) Erfinder: Prange, Rolf, 58644 Iserlohn (DE); Hoppe, Hans-Werner, 42327 Wuppertal (DE)
(74) Vertreter: Köchling, Conrad-Joachim

(56) Entgegenhaltungen:
- EP-A- 0 620 605
- WO-A-95/15586
- US-A- 4 283 467

## Beschreibung

Die Erfindung betrifft eine Batterie für Fahrzeuge mit mehreren mit Elektrolyt gefüllten Batteriezellen, wobei die Batteriezellen durch ein Schlauchsystem miteinander verbunden sind, das zum Zwecke der Elektrolytumwälzung an eine Luftzuführung anschließbar ist.

Batterien für den Antrieb von Fahrzeugen werden für die Ladung häufig mit Elektrolytumwälzungen ausgerüstet. Die Elektrolytumwälzung besteht aus einem Rohrsystem, welches in die einzelnen Batteriezellen integriert wird. Die Verbindung dieses Rohrsystemes wird auf der Batterieoberseite üblicherweise mittels Schläuchen durchgeführt. Mittels einer Membranpumpe oder alternativ über einen Druckluftanschluss wird ein definierter Luftstrom in die Zellen geleitet. Dieser Luftstrom bewirkt eine gezielte Strömung des Elektrolyten innerhalb des Zellengefäßes. Hierdurch wird die systembedingte Elektrolyt- und Temperaturschichtung aufgehoben und die Ladungsaufnahme der Batterie optimiert. Der Luftstrom wird nur für relativ kurze, zeitlich festgelegte Intervalle in die Batteriezellen geleitet.

Bedingt durch die bei Ladung und Betrieb entstehende Gasung, sowie die entstehenden Temperaturdifferenzen vom Batteriezelleninneren zum Schlauchsystem auf der Batterieoberseite entstehen in dem Rohr- oder Schlauchsystem unterschiedliche Druckverhältnisse. Dadurch kann es zum Eintritt von Elektrolyt in das Schlauchsystem kommen. Da die Anschlusskupplungen für die Luftzuführung offen sind, besteht die Gefahr, dass im Schlauch befindlicher Elektrolyt auslaufen kann. Auslaufender Elektrolyt stellt eine Gefahr für die Bediener dar und kann zu Zerstörungen an Fahrzeug, Steckvorrichtungen und Gebäudeteilen (Fußboden auf dem die Batterie abgestellt ist) führen. Da die Elektrolytumwälzung nur im Ladebetrieb angeschlossenen ist und intermittierend betrieben wird, wird auch nicht immer gewährleistet, dass der Elektrolyt durch die einströmende Luft zurückgedrückt wird.

Ausgehend von diesem Stand der Technik liegt der Erfindung die Aufgabe zugrunde, eine Batterie gattungsgemäßer Art zu schaffen, bei der das Austreten des Elektrolyten verhindert wird und somit eine Gefahr für den Bediener und die Umgebung weitestgehend vermieden ist. Insbesondere soll es auch möglich sein, bestehende Batterien mit einer entsprechenden Einrichtung nachzurüsten.

Zur Lösung dieser Aufgabe schlägt die Erfindung vor, dass in die Schlauchleitung zwischen dem externen Anschluss der Luftzuführung und den Batteriezellen ein Behälter eingebaut ist, der als Sammler für eventuell in das Schlauchsystem gelangte Batterie-Flüssigkeit dient.

Dadurch, dass die Luftzuleitung durch einen als Abscheider dienenden Behälter ergänzt wird, kann der eventuell aus den Zellen austretende Elektrolyt nicht mehr zur Kupplung für die Luftzuleitung laufen, sondern der Elektrolyt wird in dem zusätzlichen Behälter abgeschieden, so dass ein Elektrolytaustritt mit Sicherheit verhindert ist.

Zur Reduzierung der Gefahr des Eintretens von Elektrolyt in das Schlauchsystem kann zusätzlich ein Bauteil vorgesehen sein, welches für einen Druckausgleich des Schlauchsystems zum Umgebungsdruck führt. Dieses Bauteil kann beispielsweise ein Ventil, eine mikroporöse Membrane oder eine Düse sein. Die Positionierung dieses Bauteils kann batterieseitig oder pumpenseitig an der Druckluftstation erfolgen.

Der Behälter ist vorzugsweise mit einer Markierung versehen, die im Einbauzustand gut sichtbar ist. Sofern der Elektrolyt diese Markierung erreicht, muss der Behälter geleert werden. Dazu kann ein Schlauchanschluss entfernt werden und der Elektrolyt mittels eines Saugrohres abgesaugt werden. Das System ist anschließend wieder einsatzbereit.

Um eine bessere Abscheidewirkung in dem Schlauchsystem zu erreichen kann vorgesehen sein, dass die Luftzuführungsleitung oberhalb des Behälters bogenförmig oder abgewinkelt verläuft.

Das einen Druckausgleich bewirkende Bauteil bewirkt insbesondere bei angeschlossenem, aber nicht beaufschlagtem Luftanschluss einen Druckausgleich. Sofern dieses Element in Form einer Düse ausgebildet ist, ist die Düse im Durchmesser auf den Luftbedarf in der Batterie abgestimmt.

Ein Ausführungsbeispiel der Erfindung ist in der Zeichnung dargestellt und im Folgenden näher beschrieben.

Es zeigt:
- Figur 1: eine Batterie schematisch dargestellt in Seitenansicht;
- Figur 2 bis 4: Varianten des Behälters mit Anschlüssen in Seitenansicht.

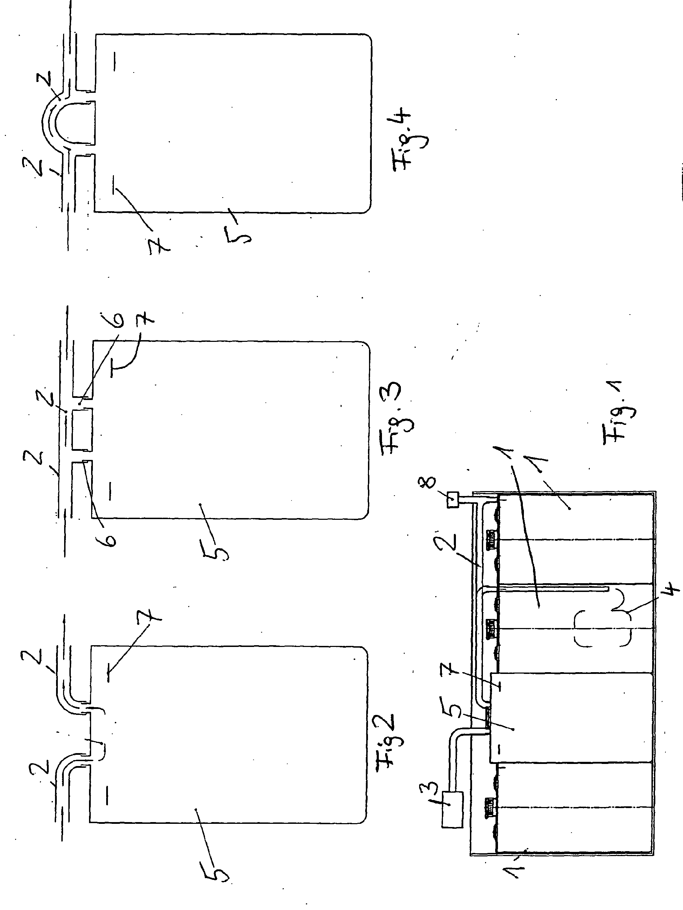

In Figur 1 ist eine Batterie für Fahrzeuge gezeigt, die mehrere Batteriezellen 1 aufweist. Zum Zwecke der Elektrolytumwälzung ist ein Rohrsystem 2 vorgesehen, durch welches die Batteriezellen 1 miteinander verbunden sind. Bei 3 ist eine Anschlusskupplung für die Luftzuführung angegeben. Die Luftzufuhr bewirkt eine gezielte Strömung 4 des Elektrolyten innerhalb des Zellengefäßes, so dass die Elektrolyt- und Temperaturschichtung aufgehoben wird und die Ladungsaufnahme der Batterie optimiert wird.

Um zu vermeiden, dass Elektrolyt in das Schlauchsystem 2 gelangt, ist die Luftzuleitung durch einen als Abscheider dienenden Behälter 5 ergänzt. Der aus den Batteriezellen 1 möglicherweise ausgetretene Elektrolyt kann nicht mehr zur Anschlusskupplung 3 durchlaufen, sondern wird in dem Behälter 5 abgeschieden. Die Luftführung kann unterschiedlich gestaltet sein, wie in den Figuren 2 bis 4 gezeigt. In Figur 2 ist die Luft am oberen Ende des Behälters 5 eingeführt und abgeführt, wobei mitgenommener Elektrolyt durch die in den Behälter 5 mündenden Öffnungen abgeschieden wird. Bei der Ausführungsform nach Figur 3 ist die Luftzufuhrleitung 2 entlang der oberen Kante des Behälters 5 geführt. Seitlich von der Leitung 2 gehen Stutzen ab, die mit Stutzen oder Löchern des Behälters 5 in leitungsoffener Verbindung stehen, so dass Elektrolyt durch diese Stutzen 6 in den Behälter 5 abtropfen kann, bzw. die Luft in diesem Behälter aus diesem herausgeführt wird. Bei der Ausführung nach Figur 4, die im Prinzip der Ausführung nach Figur 3 gleicht, ist die Luftzuführungsleitung zwischen den beiden Stutzen nach oben bogenförmig geformt oder auch abgewinkelt, um eine bessere Abscheidewirkung zu erzielen.

Der Behälter 5 weist Markierungen 7 auf, die den maximalen Füllstand von Elektrolyt anzeigen und die gut sichtbar sind, so dass der Benutzer leicht erkennen kann, dass der Behälter 5 geleert werden muss. Hierzu kann einer der Schlauchanschlüsse entfernt werden und der Elektrolyt mittels eines Rohres abgesaugt werden.

Die Erfindung ist nicht auf das Ausführungsbeispiel beschränkt, sondern im Rahmen der Offenbarung vielfach variabel.

## Patentansprüche

1. Batterie für Fahrzeuge mit mehreren mit Elektrolyt gefüllten Batteriezellen (1), wobei die Batteriezellen (1) durch ein Schlauchsystem (2) miteinander verbunden sind, das zum Zwecke der Elektrolytumwälzung an eine Luftzuführung anschließbar ist, **dadurch gekennzeichnet, dass** in die Schlauchleitung (2) zwischen dem externen Anschluss (3) der Luftzuführung und den Batteriezellen (1) ein Behälter (5) eingebaut ist, der als Sammler für eventuell in das Schlauchsystem (2) gelangte Batterie-Flüssigkeit dient.

2. Batterie nach Anspruch 1, **dadurch gekennzeichnet, dass** das Schlauchsystem (2) mit einem einen Druckausgleich bewirkenden Bauteil (8) ausgestattet ist, insbesondere einem Ventil oder einer mikroporösen Membrane oder einer Düse.

3. Batterie nach einem der Ansprüche 1 oder 2, **dadurch gekennzeichnet, dass** der Behälter (5) als flaches, plattenförmiges Teil ausgebildet ist, das zwischen die Batteriezellen (1) einbaubar ist.

4. Batterie nach einem der Ansprüche 1 bis 3, **dadurch gekennzeichnet, dass** sie Mittel zur Leitung der durch die Luftzuführung zugeführte Luft durch den Behälter (5) aufweist.

5. Batterie nach einem der Ansprüche 1 bis 4, **dadurch gekennzeichnet, dass** der Behälter (5) oberseitig einen Luftzufuhranschlussstutzen und einen zur Batterie führenden Luftabfuhranschlussstutzen aufweist.

6. Batterie nach einem der Ansprüche 1 bis 5, **dadurch gekennzeichnet, dass** der Behälter (5) oberseitig einen Anschlussstutzen (6) für Luftzufuhr und für Luftabfuhr aufweist und dass die Luftzuführungsleitung (2) am oberen Teil des Behälters gerade geführt ist und über unten liegende Löcher mit den Stutzen (6) in Verbindung steht.

7. Batterie nach einem der Ansprüche 1 bis 6, **dadurch gekennzeichnet, dass** die Luftzuführungsleitung (2) zwischen den beiden Stutzen (6) nach oben bogenförmig oder abgewinkelt verläuft.

8. Batterie nach einem der Ansprüche 1 bis 7, **dadurch gekennzeichnet, dass** das Schlauchsystem (2) batterieseitig und/oder pumpenseitig das den Druckausgleich bewirkende Bauteil (8) aufweist.

## Claims

1. Battery for vehicles, comprising a plurality of battery cells (1) filled with electrolyte, wherein the battery cells (1) are connected to one another by a hose system (2) which can be connected to an air supply for the purpose of circulating the electrolyte, **characterised in that** a container (5) which serves as a collector for any battery fluid that has passed into the hose system (2) is installed in the hose line (2) between the external connection (3) of the air supply and the battery cells (1).

2. Battery according to Claim 1, **characterised in that** the hose system (2) is equipped with a component (8) which brings about a pressure balance, in particular a valve or a microporous membrane or a nozzle.

3. Battery according to one of Claims 1 or 2, **characterised in that** the container (5) is designed as a flat, plate-like part which can be installed between the battery cells (1).

4. Battery according to one of Claims 1 to 3, **characterised in that** it comprises means for passing the air supplied by the air supply through the container (5).

5. Battery according to one of Claims 1 to 4, **characterised in that** the container (5) has at the top an air supply connection and an air discharge connection which leads to the battery.

6. Battery according to one of Claims 1 to 5, **characterised in that** the container (5) has at the top a connection (6) for air supply and for air discharge, and **in that** the air supply line (2) is passed over the top part of the container and is connected via holes in the bottom to the connections (6).

7. Battery according to one of Claims 1 to 6, **characterised in that** the air supply line (2) runs in a manner bent or angled upwards between the two connections (6).

8. Battery according to one of Claims 1 to 7, **characterised in that** the hose system (2) comprises on the battery side and/or on the pump side the component (8) which brings about the pressure balance.

## Revendications

1. Batterie pour véhicules, comprenant plusieurs éléments (1) emplis d'électrolyte, les éléments (1) de la batterie étant reliés les uns aux autres par l'intermédiaire d'un système de tuyaux souples (2) qui peut être raccordé à une amenée d'air en vue de la mise en circulation de l'électrolyte, **caractérisée par le fait qu'**un récipient (5), intégré dans le conduit souple (2) entre les éléments (1) de la batterie et le raccordement extérieur (3) de l'amenée d'air, remplit la fonction d'un collecteur d'un liquide de la batterie éventuellement parvenu dans le système de tuyaux souples (2).

2. Batterie selon la revendication 1, **caractérisée par le fait que** le système de tuyaux souples (2) est équipé d'une pièce structurelle (8) provoquant un équilibrage de pression, en particulier d'une vanne ou d'une membrane microporeuse, voire d'une buse.

3. Batterie selon l'une des revendications 1 ou 2, **caractérisée par le fait que** le récipient (5) se présente comme une pièce aplatie en forme de platine, pouvant être intégrée entre les éléments (1) de ladite batterie.

4. Batterie selon l'une des revendications 1 à 3, **caractérisée par le fait qu'**elle comporte des moyens de guidage, à travers le récipient (5), de l'air délivré par l'intermédiaire de l'amenée d'air.

5. Batterie selon l'une des revendications 1 à 4, **caractérisée par le fait que** le récipient (5) présente, à sa face supérieure, un embout de raccordement de l'arrivée d'air et un embout de raccordement de l'évacuation d'air, menant à ladite batterie.

6. Batterie selon l'une des revendications 1 à 5, **caractérisée par le fait que** le récipient (5) présente, à sa face supérieure, un embout de raccordement (6) affecté à l'arrivée d'air et à l'évacuation d'air ; et **par le fait que** le conduit (2) d'amenée d'air est guidé rectilignement sur la partie supérieure dudit récipient, et est en liaison avec ledit embout (6) par l'intermédiaire de trous pratiqués en partie basse.

7. Batterie selon l'une des revendications 1 à 6, **caractérisée par le fait que** le conduit (2) d'amenée d'air s'étend vers le haut, entre les deux embouts (6), en forme d'arc de cercle ou en décrivant un coude.

8. Batterie selon l'une des revendications 1 à 7, **caractérisée par le fait que** le système de tuyaux souples (2) présente, côté batterie et/ou côté pompe, la pièce structurelle (8) provoquant l'équilibrage de pression.
